(19) Europäisches Patentamt
European Patent Office
Office européen des brevets

(11) EP 4 738 243 A1

(12) **EUROPEAN PATENT APPLICATION**

(43) Date of publication:
06.05.2026 Bulletin 2026/19

(21) Application number: 25211931.8

(22) Date of filing: 29.10.2025

(51) International Patent Classification (IPC):
*G06T 5/60* (2024.01)

(52) Cooperative Patent Classification (CPC):
**G06T 5/60;** G06T 2207/10048; G06T 2207/20081;
G06T 2207/20084; G06T 2207/30252

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 05.11.2024 JP 2024193447

(71) Applicant: **Canon Kabushiki Kaisha
Tokyo, 146-8501 (JP)**

(72) Inventor: **KANEKO, Seigo
Tokyo, 146-8501 (JP)**

(74) Representative: **TBK
Bavariaring 4-6
80336 München (DE)**

(54) **IMAGE PROCESSING APPARATUS, IMAGE CAPTURING SYSTEM, AND IMAGE PROCESSING METHOD**

(57) An image processing apparatus (100) is configured by a machine learning unit (105) configured to execute learning and inference in order to execute processing relating to a non-visible light image using teacher data; an environmental information acquisition unit (120) configured to acquire surrounding environmental information; a degree of effectiveness deciding unit (106) configured to determine a degree of effectiveness as teacher data for the visible light image based on the environmental information that has been acquired by the environmental information acquisition unit; and a teacher data selecting unit (104) configured to determine whether or not the visible light image will be effective as teacher data for a non-visible light image that temporally corresponds to the visible light image based on the degree of effectiveness that has been decided by the degree of effectiveness deciding unit, and select teacher data that has been determined to be effective.

FIG. 8

START

S800 ACQUIRE VISIBLE LIGHT IMAGE THAT WILL BECOME TEACHER DATA AND THERMAL IMAGE THAT WILL BECOME TARGET

S801 HAS A SUBJECT BEEN IDENTIFIED IN THE THERMAL IMAGE? — NO / YES

S802 HAS A SUBJECT BEEN IDENTIFIED IN THE VISIBLE LIGHT IMAGE? — NO / YES

S803 READ ENVIRONMENTAL DATA

S804 CALCULATE DEGREE OF EFFECTIVENESS

S805 IS THE DEGREE OF EFFECTIVENESS GREATER THAN OR EQUAL TO A THRESHOLD VALUE? — NO / YES

S806 STORE VISIBLE LIGHT IMAGE AS TEACHER DATA AND THERMAL IMAGE AS STUDENT DATA

S807 EXECUTE MACHINE LEARNING

FINISH

EP 4 738 243 A1

**Description**

TECHNICAL FIELD

The present disclosure relates to an image processing system, in particular, to an image processing apparatus that performs suitable corrections on images such as noise reduction, increasing resolution, and the like in a system that combines a visible light camera that acquires visible light images and a thermal camera that acquires thermal images.

BACKGROUND

In recent years it has become the case that a system that combines a visible light camera that captures images using visible light, and a thermal camera that uses infrared rays to sense heat and visualize it is used in a variety of fields. Each of these cameras have different characteristics, and therefore, such a system makes precise observation and monitoring possible in a wide range of environments by combining these cameras, and as exemplary systems, there are surveillance camera systems, autonomous driving systems, image capturing systems, and medical-use systems.

Incidentally, in a visible light camera and a thermal camera, different wavelengths are image captured, and therefore, the appearances of the images that are captured change based on the surrounding environments. For example, in a case in which there is fog or haze (a severe environment), it becomes impossible to capture images of a faraway subject using the visible light camera due to the fog and haze. In contrast, the thermal camera is not affected by fog or haze, and it becomes possible to capture images of a faraway subject. In relation to this, in a case in which there is sufficient illuminance, and there is no fog and haze, it is possible for the visible light camera to capture images at a higher resolution than the thermal camera. This is because the wavelengths that are being image captured by the visible light camera are shorter than the wavelengths that are being captured by the thermal camera, and it is possible to make the pixel pitch narrower in the visible light camera.

As a technology in which such a combination system is used, a technology is known in which machine learning is performed using visible light images and infrared images as teacher data, and noise reduction is performed, the sense of resolution is increased, and the like. For example, Japanese Unexamined Patent Application, First Publication No. 2022-38287, discloses a technology in which far-infrared images that have been captured (monochrome images) are converted into visible light images (color images) according to a generative model using machine learning based on visible light images and non-visible light images that were image captured during different time periods.

The image processing apparatus that was described in the above Patent Publication 1 converts infrared images into visible light images with a high precision for the color values using a generative model that has visible light images as one type of teacher data. However, in the technology that is disclosed in Japanese Unexamined Patent Application, First Publication No. 2022-38287, when visible light images that were captured in a severe environment such as when fog or haze was present are used as the teacher data, the subject will not be able to be suitably image captured, and there are cases in which unsuitable teacher data is used as the correct image data.

The aim of the present disclosure is to provide an image processing apparatus that is able to perform image corrections such as noise reduction and improving the resolution using machine learning according to suitable teacher data in a system that combines a visible light camera that acquires visible light images and a thermal camera that acquires thermal images.

SUMMARY

According to an aspect of the present invention, preferably, an image processing apparatus that obtains a depth from an input image includes: a depth information acquisition unit configured to acquire depth information; a ground region determination unit configured to determine a ground region of a subject of the image; and a reliability calculation unit configured to calculate reliability for the depth acquired by the depth information acquisition unit based on the determination of the ground region determination unit.

Features of the present disclosure will become apparent from the following description of embodiments with reference to the attached drawings. The following description of embodiments is described by way of example.

The present disclosure in its first aspect provides an information processing apparatus as specified in claim 1. Optional features are specified in claims 2 to 8.

The present disclosure in its second aspect provides an information processing apparatus as specified in claim 9. Optional features are specified in claims 10 to 17.

The present disclosure in its third aspect provides an information processing method as specified in claim 18.

The present disclosure in its fourth aspect provides an information processing method as specified in claim 19.

The present disclosure in its fifth aspect provides a recording medium as specified in claim 18 or 19.

Features of the present disclosure will become apparent from the following description of embodiments with reference to the attached drawings. The following description of embodiments is described by way of example

BRIEF DESCRIPTION OF THE DRAWINGS

FIG. 1 is an image configuration diagram for an image capturing system according to a First Embodiment.
FIG. 2 is an overall configurational diagram for an image capturing system according to the First Embodiment.
FIG. 3 is a hardware configuration diagram for an image processing apparatus.
FIG. 4 is a hardware configuration diagram for a client apparatus.
FIG. 5A is a diagram showing one example of a visible light image in a case in which environmental conditions at the time of the image capturing were good.
FIG. 5B is a diagram showing one example of a non-visible light image for a case in which environmental conditions at the time of the image capturing were good.
FIG. 6A is a diagram showing one example of a visible light image for a case in which environmental conditions at the time of the image capturing were poor.
FIG. 6B is a diagram showing one example of a non-visible light image for a case in which environmental conditions were poor at the time of the image capturing.
FIG. 7 is a diagram showing one example of a non-visible light image in which the contours have been corrected using machine learning.
FIG. 8 is a flowchart showing processing that stores a visible light image as teacher data and performs machine learning.
FIG. 9 is a block diagram showing processing for when learning is performed for machine learning according to the First Embodiment.
FIG. 10 is a schematic diagram of a neural network that serves as a model for machine learning according to the First Embodiment.
FIG. 11 is a block diagram showing processing for when inference is performed for machine learning according to the First Embodiment.
FIG. 12 is an overall configurational diagram of an image capturing system according to a Second Embodiment.
FIG. 13 is a flowchart showing output processing for a thermal image according to the Second Embodiment.
FIG. 14 is a diagram showing one example of a visible light diagram in which the contours have been corrected by machine learning.
FIG. 15 is a flowchart showing processing in which a thermal image is stored as teacher data and machine learning is performed.
FIG. 16 is a flowchart showing output processing for a visible light image according to a Fourth Embodiment.
FIG. 17 is an overall configurational diagram for an image capturing system according to a Fifth Embodiment.

DESCRIPTION OF THE EMBODIMENTS

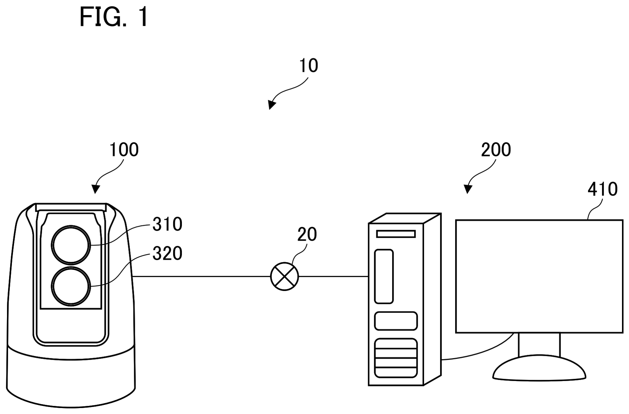

While the present disclosure has been described with reference to embodiments, it is to be understood that the present disclosure is not limited to the disclosed embodiments. The scope of the following claims is to be accorded the broadest interpretation so as to encompass all such modifications and equivalent structures and functions.
Below, each embodiment according to the present disclosure will be explained using FIG. 1 through FIG. 17.

[First Embodiment]

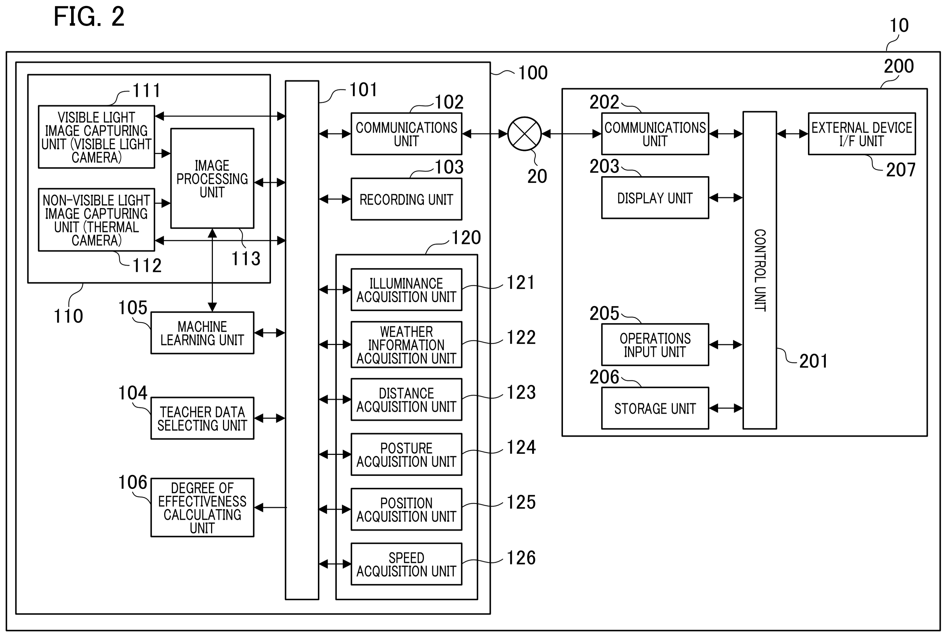

Below, the First Embodiment according to the present disclosure will be explained using FIG. 1 through FIG. 11. First, an image of the image capturing system according to the First Embodiment will be explained using FIG. 1.
FIG. 1 is an image configuration diagram for the image capturing system according to the First Embodiment.
As is shown in FIG. 1, in the image capturing system 10, an image processing apparatus 100 and a client apparatus 200 are connected by a network 20, and image data transfers are performed.
The image processing apparatus 100 is a so-called dual spectrum camera that has both functions of image capturing visible light and image capturing thermal images using infrared rays, and is provided with a visible light image capturing apparatus 310, and a non-visible light image capturing apparatus 320. The client apparatus 200 is connected to a display apparatus 410, and the user is able to confirm the visible light images and thermal images that have been captured by the image processing apparatus 100 using the display apparatus 410.
Next, the configuration of the image capturing system according to the First Embodiment will be explained using FIG. 2 to FIG. 4.

FIG. 2 is an overall configurational diagram of the image capturing system according to the First Embodiment.

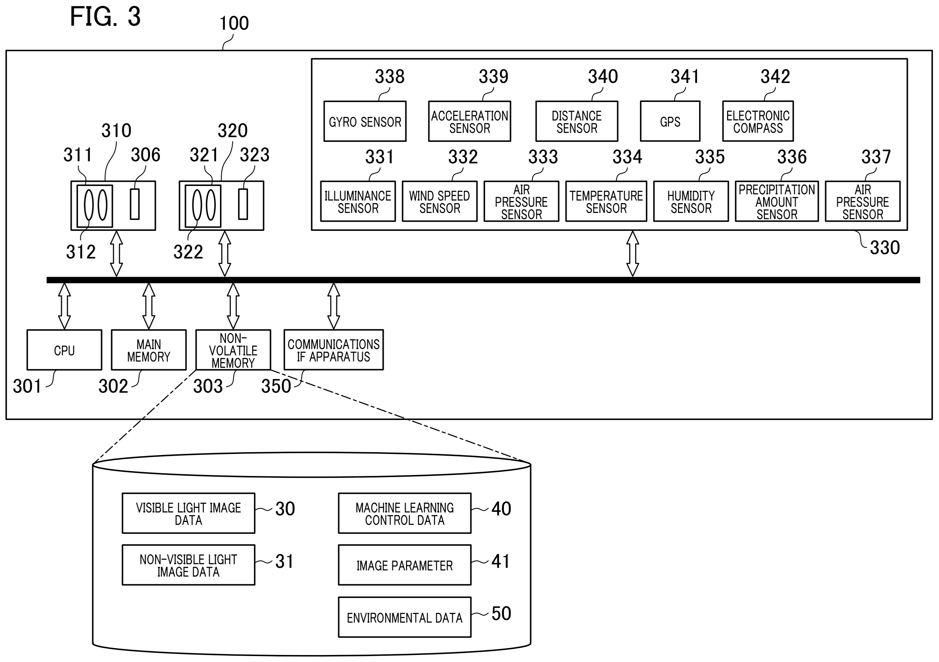

FIG. 3 is a hardware configuration diagram of the image processing apparatus.

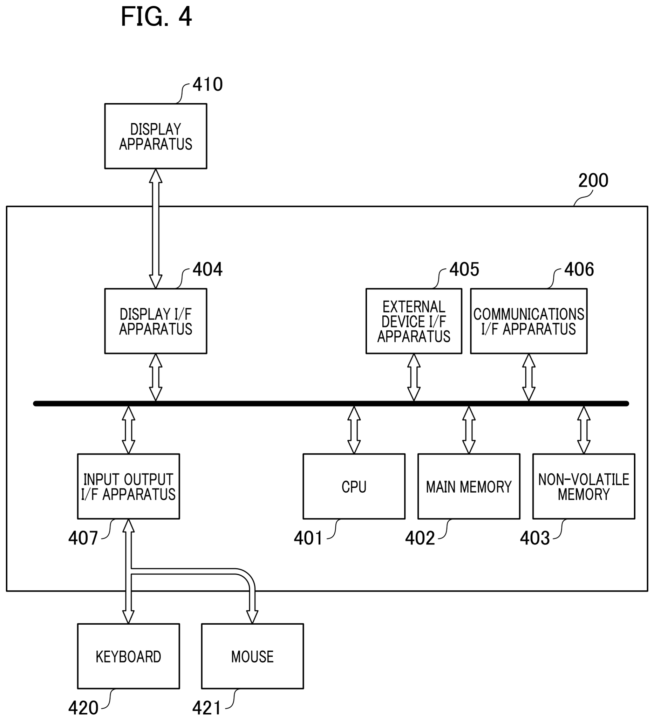

FIG. 4 is a hardware configuration diagram of the client apparatus.

As is shown in FIG. 2, the image capturing system 10 is a configuration in which the image processing apparatus 100 and the client apparatus 200 have been connected by a network 20.

The network 20 may be a wired network, may also be a wireless network, may be a dedicated network such as a LAN (local Area Network), and may also be a global network such as the internet.

The client apparatus 200 is an apparatus that displays images that have been processed by the user using the image processing apparatus 100, collects a state from the image processing apparatus 100, and receives commands for operations regarding the image processing apparatus 100 from the user.

The image processing apparatus 100 is configured by a control unit 101, an image capturing unit 110, a communications unit 102, a storage unit 103, a teacher data selecting unit 104, a machine learning unit 105, a degree of effectiveness calculating unit (degree of effectiveness determining unit) 106, and an environmental information acquisition unit 120, which serve as functional configurations.

The control unit 101 is a functional unit that performs image processing, and control of each unit in the image processing apparatus 100.

The communications unit 102 is a functional unit that performs communications between the image processing apparatus 100 and the client apparatus 200. The communications unit 102 is able to transmit image data that has been output from an image processing unit 113 of the image capturing unit 110 to the client apparatus 200 via the network 20. In addition, the communications unit 102 is able to receive operations information that is input from an operations input unit 205 of the client apparatus 200.

The storage unit 103 is a functional unit that stores necessary data and programs for the image processing apparatus 100. The storage unit 103 is able to store and read out image data that has been output by the image processing unit 113 of the image capturing unit 110. Furthermore, the storage unit 103 is also used as a storage region for programs that are executed by the control unit 101, a storage region for each type of parameter, and a work region for when programs are being executed.

The image capturing unit 110 has a visible light image capturing unit 111 and a non-visible light image capturing unit 112. The wavelengths for the electromagnetic waves that are image captured by the visible light image capturing unit 111 and the non-visible light image capturing unit 112 are different, the visible light image capturing unit 111 captures images in the wavelength band for visible light (approximately 360nm - 830nm), and the non-visible light image capturing unit 112 corresponds to, for example, the wavelength band for infrared rays (approximately 830 nm - 15000nm).

The image processing unit 113 is a functional unit that converts both the image signals that have been photoelectrically converted in the visible light image capturing unit 111 and the image signals that have been photoelectrically converted in the non-visible light image capturing unit 112 into image data (digital data).

Pixel data is converted into a digital signal using A/D conversion in the image processing unit 113. The digital signal that has been converted is further converted into image data by undergoing correction processing such as black level correction, gamma curve adjustment, temperature correction, flaw correction, noise reduction, white balance correction, and the like, as well as development processing. In addition, data compression processing such as MP4, JPEG formatting, and the like are also performed. Correction according to the wavelength characteristics of each image capturing element is performed in this image processing unit.

The visible light image capturing unit 111 and the non-visible light image capturing unit 112 perform image capturing during the same time, and are able to capture images of the wavelengths for visible light and non-visible light that correspond to each other temporally.

In the present embodiment, as is shown in FIG. 2, an example has been explained in which a single image processing apparatus 100 has both the visible light image capturing unit 111 and the non-visible light image capturing unit 112. However, the image processing apparatus 100 may also have the visible light image capturing unit 111 and the non-visible light image capturing unit 112 as a separate apparatus. In addition, the visible light image capturing unit 111 and the non-visible light image capturing unit 112 may also each be separate apparatuses. However, in order to capture images of the same subject, it is necessary that at least a portion of the image capturing region of the visible light image capturing unit 111 and the image capturing region of the non-visible light image capturing apparatus 112 overlaps.

The teaching data selecting unit 104 is a functional unit that determines whether or not a visible light image that has been acquired will be effective as teacher data for a thermal image, and selects visible light images. In a case in which the degree of effectiveness (explained below in detail) for a visible light image is high, this visible light image is saved in the storage unit 103 to serve as image data that will be used in the teacher data.

The degree of effectiveness calculating unit 106 is a functional unit that calculates (decides) the degree of effectiveness based off of environmental information that has been acquired by the environmental information acquisition unit 120. The determination for selecting teacher data is performed by comparing the degree of effectiveness that has been calculated from the environmental data that has been acquired by the environmental information acquisition information unit 120 with a predetermined threshold value (to be described in detail below). In addition, it may also be made such that the calculation of the degree of effectiveness is performed based on analysis results for the image that has been acquired, not just the information for the environmental data that has been acquired by the environmental information acquisition unit 120.

The machine learning unit 105 is configured by a neural network (described below) that performs machine learning based on teacher data and student data. It is possible to perform development processing (adjusting hues such as white balance, contrast, and the like, outputting an image in a viewable form such as a JPEG format) on the captured images using image parameters that have been calculated by a neural network. In addition, the machine learning unit 105 may also be one body with the image processing unit 113.

Note that in the present specification, "teacher data" is made to mean input data that is applied to a model, and a data set that has correct labels (target values) for this data according to the general definition of machine learning. In addition "student data" is made to mean target data that learns from the teacher data.

As will be explained below in detail, the teacher data of the present embodiment is visible light images with high resolutions, and the student data is thermal images with low resolutions.

The environmental information acquisition unit 120 is a functional unit that acquires environmental information for the image processing apparatus 100, and surroundings of the image processing apparatus 100. The environmental information acquisition unit 120 has an illuminance acquisition unit 121, a weather information acquisition unit 122, a distance acquisition unit 123, a posture acquisition unit 124, a position acquisition unit 125, and a speed acquisition unit 126.

The illuminance acquisition unit 121 is a functional unit that processes digital data that has been acquired, and acquires environmental information relating to brightness with hardware that is realized by an illuminance sensor. In addition, the brightness may also be calculated from the image data (image capturing conditions such as the exposure, gain, aperture, shutter speed, and the like, and luminance information) that is acquired from the image capturing unit 110. In addition, time information may be acquired using an RTC (real time clock) (a clock function that is encased in the apparatus), and the brightness may also be predicted from the time period (morning, daytime, nighttime).

The weather information acquisition unit 122 processes the digital data that is acquired, and acquires environmental information relating to weather information using hardware that is realized by a temperature sensor, a humidity sensor, a precipitation amount sensor, a wind speed sensor, an atmospheric pressure sensor, and the like. In addition, the weather may also be predicted by analyzing images from image data that has been acquired from the image capturing unit 110.

The distance acquisition unit 123 processes data output from a distance sensor such as Lidar (light detection and ranging), milli-wave radar, an ultrasonic sensor, and the like, and calculates distance information (environmental information) for up to a surrounding environment of the image processing apparatus 100, and an obstacle. In addition, the distance information may also be calculated from a focus evaluation value from phase difference AF (auto focus).

The posture acquisition unit 124 processes digital data that is output from a gyro sensor (angular speed sensor), and the like, and calculates changes in the rotation and orientation of the image processing apparatus 100.

The position acquisition unit 125 performs specification of a position of the image processing apparatus 100 by receiving and processing a signal from a GPS (global positioning system), as well as processing for an electronic compass signal and specification of an orientation of the image processing apparatus 100. In addition, it is possible to calculate environmental information for surroundings of the image processing apparatus 100 from the illuminance acquisition unit 121 and the weather information acquisition unit 122. In addition, it is also possible to calculate environmental information for a region that is being image captured from the image capturing direction and angle of view of the image capturing unit 110, and the distance information that is acquired in the distance information acquisition unit 123.

The speed acquisition unit 126 processes digital data that is output from a speed sensor and the like, and calculates acceleration and a movement speed according to the image processing apparatus 100.

A portion or the entirety of the functions of the environmental information acquisition unit 120 does not need to a be a function of the image processing apparatus. For example, it is sufficient if communications are possible with the image processing apparatus 100 and the client apparatus 200 in an IOT (internet of things) device, and the like. In addition, these functions may also be had by the client apparatus 200.

The client apparatus 200, is for example, an information processing apparatus such as a personal computer and the like, and is configured by a control unit 201, a communications unit 202, a display unit 203, the operations input unit 205, a recording unit 206, and an external apparatus I/F unit 207.

The control unit 201 is a functional unit that controls each configurational element of the client apparatus 200, and executes system control such as settings for each type of parameter, display control, data transmission and reception commands, and the like.

The communications unit 202 acts as a functional unit that performs communications with the image processing apparatus 100 via the network 20.

The display unit 203 is a functional unit that is controlled by the display control unit 204, and displays video images that have been captured by each image capturing apparatus, and each type of information, and is realized by an LCD (liquid crystal display).

The operations input unit 205 is a functional unit that performs the input of data and user commands in relation to the client apparatus 200, and is realized by a keyboard, a mouse, and a touch panel. The user is able to operate the keyboard, mouse and touch panel, and perform control of the image processing apparatus 100 and the client apparatus 200.

The recording unit 206 is a functional unit that records programs that are executed by the client apparatus 200, storage regions for each type of parameter, and work data for programs that are being executed.

The external apparatus I/F (interface) unit 207 is an interface for connecting the client apparatus 200 to a PC (personal computer), and a display apparatus such as a display, and the like. The external apparatus I/F unit 207 is also an interface for connecting with an external storage medium (for example, a hard disk, a memory card, an SD card, a USB memory, and the like).

In addition, the client apparatus 200 may also be able to connect to a server of an external unit that has been connected thereto, and to handle cloud data. In addition, a portion of the functions may also be had by a server, and a separate personal computer that is connected to a server.

Next, the hardware configuration of the image processing apparatus will be explained using FIG. 3. As is shown in FIG. 3, the image processing apparatus 100 is a mode in which the visible light image capturing apparatus 310, a non-visible light image capturing apparatus 320, a CPU (central processing unit) 301, a main memory 302, a non-volatile memory 303, an environmental information acquisition device group 330, and a communications I/F apparatus 350 have been linked by a bus.

The visible light image capturing apparatus 310 is provided with a visible light image capturing optical system 311, and a visible light image capturing element 313. In the same manner, the non-visible light image capturing apparatus 320 is provided with a non-visible light image capturing optical system 321, and a non-visible light image capturing element 323.

The visible light image capturing optical system 311 has a visible light lens 312 (a zoom lens, a focus lens), and an aperture mechanism, and condenses visible light from a subject (wavelength: approximately 360nm - 830nm) on a light receiving surface of the visible light image capturing element 313. In this context, the visible light lens 312 is a lens with a high transmittance for the wavelength band for visible light, and the visible light image capturing element 313 is an element with a high sensitivity in the wavelength band for visible light.

In the same manner, the non-visible light image capturing optical system 321 has a non-visible light lens 322 (a zoom lens, a focus lens) and an aperture mechanism, and concentrates non-visible light from a subject (wavelengths other than the wavelengths for visible light, for example, the wavelengths for infrared rays of approximately 830nm - 15000nm) on a light receiving surface of the non-visible light image capturing element 323. In this context, the non-visible light lens 322 is a lens with a high transmittance of the wavelength band for non-visible light, and the non-visible light image capturing element 323 is an element with a high sensitivity in the wavelength band for non-visible light.

In this context, a zoom lens is a lens that is able to move in the direction of the optical axis and change the image capturing magnification, and a focus lens is a lens that is able to move in the direction of the optical axis and adjust the focal point. The aperture mechanism is a mechanism that adjusts the amount of light that passes through the optical system.

The visible light image capturing element 313 and the non-visible light image capturing element 323 are semiconductor elements such as a CMOS (complementary metal oxide semiconductor) sensor, a CCD (charge coupled device) sensor, and the like. The visible light image capturing element 313 and the non-visible light image capturing element 323 photoelectrically convert a subject image from light that has become incident from both of the image capturing optical systems, and generate a video image signal, which is an analogue signal. In particular, the non-visible light image capturing element 323 is an infrared sensor which is sensitive to infrared rays such as near infrared rays, mid infrared rays, and far infrared rays. In particular, far infrared rays are generally used in thermal cameras. In addition, according to the intended use, this may also be a semiconductor element that is sensitive to wavelengths other than the wavelengths for visible light such as an ultraviolet sensor and the like.

The CPU 301 is a processor that performs control of each function of the image processing apparatus 100, and processing. The CPU 301 performs control of each function of the control unit 101, the image processing unit 113, the teacher data selecting unit 104, the machine learning unit 105, and the like that were shown in the functional diagram in FIG. 2.

The main memory 302 is a volatile semiconductor element such as a RAM (random access memory), and stores programs that are executed by the CPU 301, and work data. The non-volatile memory 303 is a non-volatile semiconductor element such as a flash memory, and stores settings data for the image processing apparatus 100, and programs that are installed on the image processing apparatus 100. The non-volatile memory 303 of the present embodiment stores visible light image data 30, non-visible light image data 31, machine learning control data 40, an image parameter 41, and environmental data 50.

The visible light image data 30 is data for a visible light image that was captured using the visible light image capturing apparatus 310. The non-visible light image data 31 is data for a non-visible light image that was captured in the non-visible light image capturing apparatus 310. The machine learning control data 40 is data that is used in control of learning and inference for the machine learning. The image parameter 41 is a parameter for processing an image. The environmental data 50 is data relating to environmental information that has been acquired by the environmental information acquisition device group 330.

The communications I/F apparatus 350 is an interface apparatus for performing communications between the image processing apparatus 100 and other apparatuses such as the client apparatus 200 and the like.

Note that in the image processing apparatus 100 of the present embodiment, the CPU 301 has been made a hardware configuration that executes programs that have been installed on the non-volatile memory 303. However, the present embodiment is not limited thereto, and it is also possible to realize this using one logical circuit element (for example, an ASIC (application specific integrated circuit)).

The environmental information acquisition device group 330 is each type of sensor device for acquiring the environmental information. The environmental information acquisition device group 330 is, for example, as is shown in FIG. 3, an illuminance sensor 331, a wind speed sensor 332, an atmospheric pressure sensor 333, a temperature sensor 334, a humidity sensor 335, a precipitation amount sensor 336, a gyro sensor 338, an acceleration sensor 339, and a distance sensor 340. In addition, a GPS receiver 341, and an electronic compass 342 are included in the environmental information acquisition device group 330.

The illuminance sensor 331 is an apparatus that measures illuminance around the image processing apparatus 100. The wind speed sensor 332 is an apparatus that measures wind speed in the location of the image processing apparatus 100, the atmospheric pressure sensor 333 is an apparatus that measures atmospheric pressure in the location of the image processing apparatus 100, the temperature sensor 334 is an apparatus that measures the temperature in the location of the image processing apparatus 100, the humidity sensor 335 is an apparatus that measures humidity in the area of the image processing apparatus 100, and the precipitation amount sensor 336 is an apparatus that measures the amount of precipitation in the location of the image processing apparatus 100.

The gyro sensor 338 is an apparatus that detects a change amount (each speed) for angle per time for the image processing apparatus 100. The acceleration sensor 339 is an apparatus that measures the acceleration for when the image processing apparatus 110 is moving. The distance sensor 340 is an apparatus such as lidar (light detection and ranging), a milli-wave radar, an ultrasonic sensor, and the like that calculates a distance until a surrounding environment of the image processing apparatus 100, and an obstacle.

The GPS receiver 341 receives a signal from a manmade satellite that rotates in orbit around the earth, and specifies a current location of the image processing apparatus 100. The electronic compass 342 is an apparatus that electronically measures a size of terrestrial magnetism by using a magnetic sensor, and calculates directional information by calculating this measured value.

Note that the image processing apparatus 100 of the present embodiment has been explained as an apparatus that reads out a program and executes functions. This program is supplied to the image processing apparatus 100 via a network or a storage medium. In the present embodiment, an example has been explained in which the CPU 301 executes a program that has been installed on the non-volatile memory 303. However, this can also be realized by one logical integrated circuit (for example, an ASIC: application specific circuit).

Next, the hardware configuration of the client apparatus will be explained using FIG. 4.
The client apparatus 200 is, for example, a general information processing apparatus such as a personal computer and the like. As is shown in FIG. 4, the client apparatus 200 is a mode in which a CPU 401, a main memory 402, a non-volatile memory 403, a display I/F apparatus 404, an external device I/F apparatus 405, a communications I/F apparatus 406, and an input output I/F apparatus 407 have been connected by a bus.

The CPU 401 performs control of each unit of the client apparatus 200, and execution of programs. The main memory 402 is a volatile semiconductor element, and stores the programs that are executed by the CPU, and work data. The non-volatile memory 403 is a non-volatile semiconductor element such as a flash memory, and the like, and stores programs that are executed in the client apparatus, and settings data for the client apparatus. The display I/F apparatus 404 is an interface apparatus for connecting to a display apparatus 410 such as a display and the like. The external device I/F apparatus 405 is an interface for connecting the client apparatus with external devices, and performs format conversion according to wired connection standards when the client apparatus 200 is connected with a wire to an external device. The communications I/F apparatus 406 is an apparatus for connecting the client apparatus 200 to the image processing apparatus 100 using a wired connection, and a wireless connection. The input output I/F apparatus 407 is an interface apparatus that connects an input output apparatus such as a keyboard 420, a mouse 421, and the like.

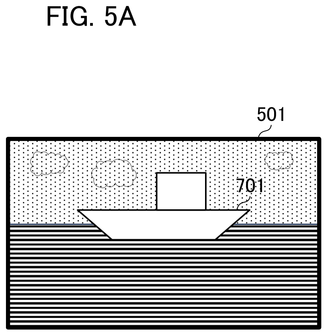

Next, a specific example of correcting a thermal image using machine learning by making a visible light image the teacher data will be explained using FIG. 5A through FIG. 7.
FIG. 5A is a diagram showing one example of a visible light image for a case in which environmental conditions at the time of the image capturing were good.

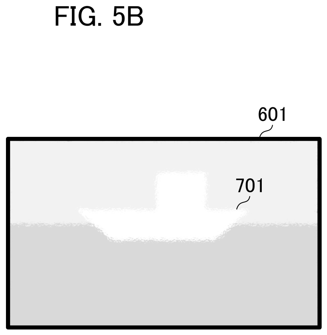

FIG. 5B is a diagram showing one example of a non-visible light image for a case in which environmental conditions at the time of the image capturing were good.

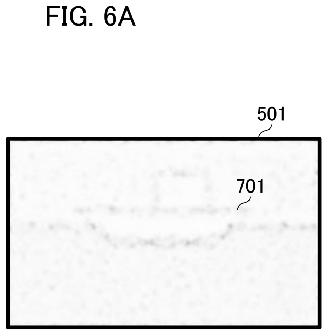

FIG. 6A is a diagram showing one example of a visible light image for a case in which environmental conditions at the time of the image capturing were poor.

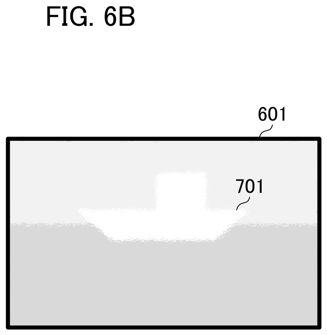

FIG. 6B is a diagram showing one example of a non-visible light image for a case in which environmental conditions at the time of the image capturing were poor.

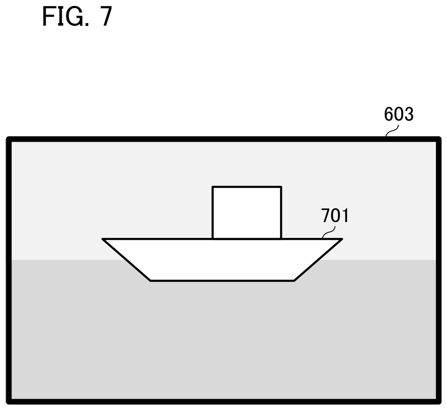

FIG. 7 is a diagram showing one example of a non-visible light image in which the contours have been corrected using machine learning.

In the image processing apparatus 100 of the present embodiment, image processing is performed that corrects the thermal image (non-visible light image) using machine learning by making the visible light image the teacher data. When selecting the visible light image to serve as the teacher data, the key point of the idea is referencing the environmental conditions from the time of the image capturing.

In order to perform such image processing, it becomes a prerequisite that image capturing is performed in a direction in which at least a portion of the image capturing region for the visible light image capturing unit 111 and the image capturing region for the non-visible light image capturing unit 112 of the image processing apparatus 100 overlaps. In addition, machine learning is performed on a subject (region) that is image captured in this overlapping region. In this context, an example is explained of a case in which the size and position of the image capturing region are the same at an ideal angle of view in which there is no parallax between the visible light image capturing unit 111, and the non-visible light image capturing unit 112. In addition, if there is a case in which there is a difference in the regions that are image captured, it is made such that the machine learning is performed after having cut out the same region from both of these and correcting the pixel positions. In addition, in a case in which there is a physical parallax between the visible light image capturing unit 111 and the non-visible light image capturing unit 112, it is preferable that the parallax is corrected by using trapezoidal correction, and the like.

In this context, FIG. 5A shows a visible light image for a case in which the environmental conditions from the time of the image capturing were good, and FIG. 5B shows a thermal image for a case in which the environmental conditions at the time of the image capturing were good. In the present embodiment, the concept of "a degree of effectiveness" during the image capturing is introduced. As the indices for the degree of effectiveness, it is determined that the more suitable the environment is to the image capturing of the visible light image, and the non-visible light image, the higher the degree of effectiveness becomes. For example, at the time of the image capturing for the image processing apparatus 100, there are cases in which there is sufficient illuminance during time periods in which the sun is out, there are cases in which there is no fog, haze, rain, snow, hail, and the like, and there are cases in which shaking of the image processing apparatus 100 is small, and the like. In addition, although a single piece of information may be used in the determination of the degree of effectiveness (for example, information for the brightness that is acquired from the illuminance sensor), this may also be determined by combining different pieces of information. Note that the calculation of the degree of effectiveness will be explained in detail below.

Generally, in an environment with a high degree of effectiveness, as is shown in FIG. 5A, and FIG. 5B, the visible light image 501 will become an image in which a higher sense of resolution (image quality) can be obtained than for the thermal image 601. In the present embodiment, an explanation is given in which an image in which the contours are clear is made an image with a high sense of resolution (image quality). As is shown in FIG. 5A, in the visible light image 501, the contours (edges) of a subject 701 of which an image is captured are clear, and as is shown in FIG. 5B, in the thermal image 601, the contours of the subject 701 of which an image is captured become less clear than in the visible light image 501. At this time, the sense of resolution for the thermal image 601 is low, and therefore, it is becomes possible to generate a thermal image 601 in which the contours have been made clear by performing image processing using machine learning in which the visible light image 501 has been made the teacher data and the thermal image 601 has been made the student data during the image processing by machine learning. Therefore, in a case in which the degree of effectiveness is low in this manner, the visible light image 501 is stored as teacher data for the thermal image 601. Note that a specific example of a thermal image that has been corrected by machine learning will be explained below.

In contrast, when the environmental conditions from the time of the image capturing are poor, that is, when the degree of effectiveness is low, the visible light image 501 becomes like the diagram shown in FIG. 6A, and the non-visible light image 601 becomes like the diagram shown in FIG. 6B.

FIG. 6A shows a state in which the visibility of the visible light image has been degraded by fog (a state in which the sense of resolution is low). In an environment in which the image capturing conditions are poor in this manner (a severe environment), there are cases in which the subject 701 cannot be grasped in the visible light image 501. Provisionally, in such a case, if the visible light image 501 is made the teacher data and the thermal image 601 is made the student data, the contours of the subject 701 will become even more unclear, and the sense of resolution will be made lower. Therefore, in a case in which the degree of effectiveness is low in this manner, it is made such that the visible light image 501 is not selected as the teacher data for the thermal image 601.

When the environmental conditions are good, that is, in the case of an environment with a high degree of effectiveness, the visible light image that is shown in FIG. 5A is made the teacher data, the thermal image that is shown in FIG. 5B is made the student data, the machine learning is performed, and the correction of the contours is performed, the thermal image 611 after image correction that is shown in FIG. 7 can be obtained. As is shown in FIG. 7, in the thermal image 611 after image correction, the contours of the subject 701 have become clearer, and the sense of resolution has been increased in comparison to the thermal image 601.

Next, if the relationship between each kind of environmental information that is acquired by the environmental information acquisition unit 120 is shown, this becomes as is shown below.

It is preferable that the degree of effectiveness is comprehensively determined from each type of information from the environmental information acquisition unit 120. In a case in which the image capturing is performed in a severe environment for the visible light image capturing unit 111, it is determined that the degree of effectiveness is low.

When the illuminance that is acquired by the illuminance acquisition unit 121 is large, that is, when the environment is bright, it is determined that the degree of effectiveness is high, and when the illuminance is small, that is, when the environment is dark, it is determined that the degree of effectiveness is low.

In a case in which in the weather information that is acquired by the weather information acquisition unit 122, the weather is sunny, it is determined that the degree of effectiveness is high. In a case in which the weather is poor (there is fog, haze, rain, hail, sleet, lightning, a windstorm, and the like), it is determined that the degree of effectiveness is low.

In relation to the distance information that is acquired by the distance acquisition unit 123, when the distance between the image processing apparatus 100 and the subject is small, that is, when the subject is image captured at a close distance, it is determined that the degree of effectiveness is high. When the distance between the image processing apparatus 100 and the subject is large, that is, in a case in which the subject is image capturing from far away, the degree of effectiveness is set to be small. This is because it is more difficult for a subject at a close distance to be affected by fog, haze, and the like, and it is also thought that this is a primary factor for the degree of effectiveness being high.

In relation to the information that is acquired by the posture acquisition unit 124, in a case in which there are large fluctuations (the measurement value for vibrations), this means that the shaking is large, and it is determined that the degree of effectiveness is low. In a case in which there are small fluctuations, it is determined that the degree of effectiveness is high. In a case in which the degree of effectiveness is low, the subject will be blurred due to the shaking, and therefore, this image is not suited to being teacher data. In addition, in a case in which the fluctuations that are determined in the posture acquisition unit 124 are large, it is preferable that neither of the visible light image and the thermal image (an example in which the thermal image is made the teacher data will be explained below in the Second Embodiment) is learned as the teacher data.

In relation to the information that is acquired by the speed acquisition unit 126, in the same manner as for the posture acquisition unit 124, in a case in which the fluctuations (movement speed) are large, there is a large amount of shaking, and it is determined that the degree of effectiveness is low. In a case in which the fluctuations are small, it is determined that the degree of effectiveness is high. In a case in which the degree of effectiveness is low, the subject will be blurred due to the shaking, and therefore, this image is not suited to being teacher data. In addition, in a case in which the fluctuations that are determined in the posture acquisition unit are large, it is preferable that neither of the visible light image and the thermal image (explained below in the Second Embodiment) is applied as the teacher data.

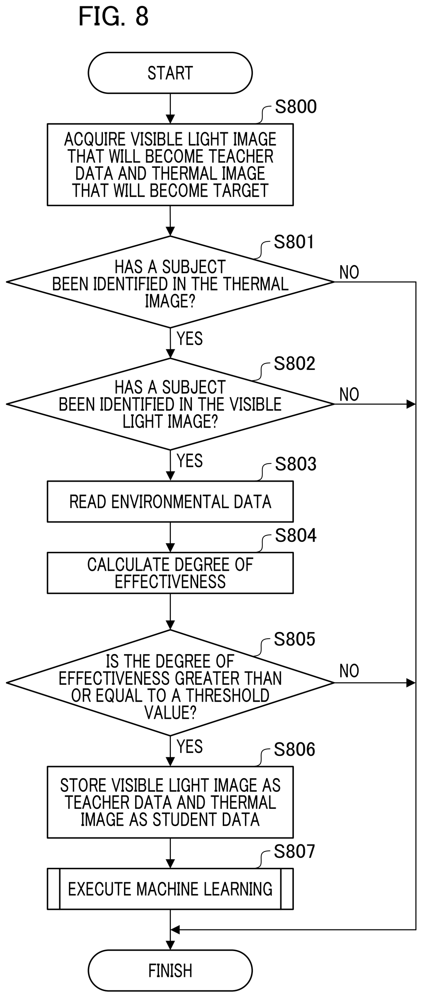

Next, the image processing that is performed by the image capturing system according to the First Embodiment will be explained using FIG. 8 through FIG. 11.

FIG. 8 is a flowchart showing processing in which the visible light image is stored as teacher data and machine learning is performed.

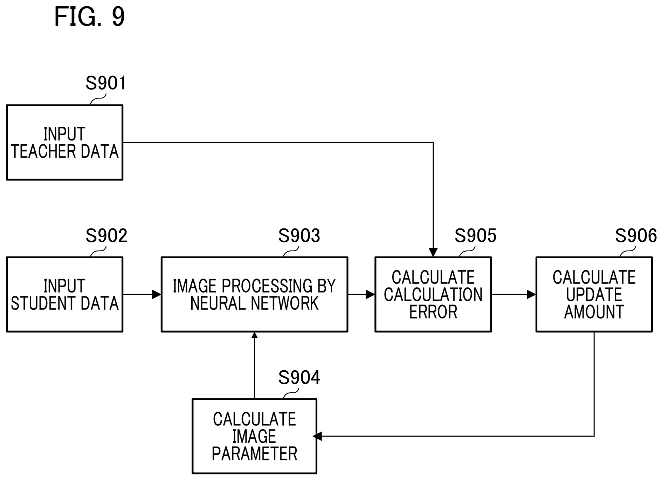

FIG. 9 is a block diagram showing processing for the time of learning for machine learning according to the First Embodiment.

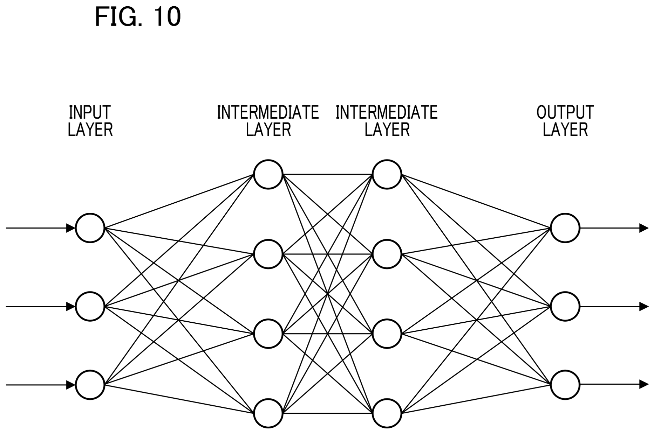

FIG. 10 is a schematic diagram for a neural network using a model for machine learning according to the First Embodiment.

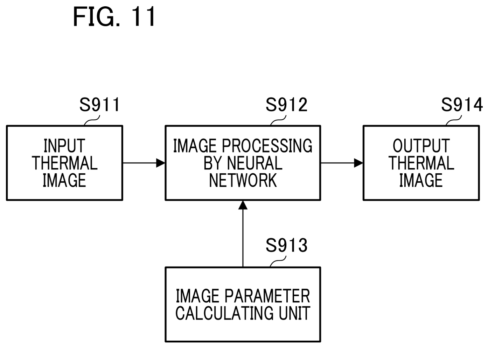

FIG. 11 is a block diagram showing processing for the time of inference for machine learning according to the First Embodiment.

First, using FIG. 8, processing will be explained in which the visible light image is saved as teacher data, and machine learning is performed.

First, the teacher data selecting unit 104 of the image processing apparatus 100 acquires a visible light image that will become a candidate for the teacher data, and a thermal image that was image captured at the same time as the visible light image (S800).

Next, the teacher data selecting unit 104 of the image processing apparatus 100 determines whether or not the subject 701 was image captured in the thermal image 601 from the image (S801). As the determination method, for example, it is determined whether or not there is a heat source. In a case in which the subject 701 was image captured (S801: YES), the processing proceeds to S802. At this time, it is not necessary to be able to attain a sufficient sense of resolution in the thermal image 601. Therefore, it is preferable that a method other than contour (edge) detection is used to determine whether or not the subject 701 was image captured, such as, for example, a threshold value determination for a difference in temperatures between the subject and the background, movement detection, and the like. In addition, in a case in which it has been determined that the subject 701 was not image captured in the thermal image 601 (S801: NO), this thermal image is not suitable as the student data, and therefore, the processing is completed.

In a case in which the subject 701 was image captured in the thermal image 601, it is determined whether or not the subject 701 has been identified in the visible light image 501 from the image (S802). As a determination method, for example, it is determined whether or not the subject 701 has specific feature points. That is, image analysis is performed on the visible light image 501, edge detection is performed, and it is determined whether or not the feature points are present from the shape thereof. For example, in a case in which it is assumed that subject 701 is a ship, the results of the edge detection, of whether or not the ship has specific feature points is determined by image processing. In a case in which the specific subject has been image captured (S802: YES), the processing proceeds to S803. In a case in which the specific subject has not been image captured (S802: NO), the processing is completed.

In this context, although an explanation has been given of an example in which during the analysis of whether or not the subject exists in the visible light image 501, the feature points of the subject are identified, a determination method such as determining whether or not there are changes in the luminance (changes in the image due to a movable apparatus), and the like may also be used. In addition, even if one of S801 and S802 is omitted, the image processing apparatus 100 is theoretically able to detect the subject 701. In addition, in a case in which the user specifies the subject 701 that is present in the image, and in a case in which the user specifies a specific region that is present in the image, it is possible to omit S801 and S802. In addition, the subject 701 may also be detected from information that is obtained from the client apparatus 200, the distance sensor 340, the GPS 341, and the like.

Next, when it has been determined that the subject 701 was image captured in the visible light image 501, the degree of effectiveness calculating unit 106 of the image processing apparatus 100 reads the environmental data 50 that was acquired by the environmental information acquisition unit 120 (S803).

Next, the degree of effectiveness calculating unit 106 of the image processing apparatus 100 calculates the degree of effectiveness based on the environmental data 50 that was read during S803 (S804). Note that the specific calculation method for the degree of effectiveness will be described in detail below.

Next, the teacher data selecting unit 104 of the image processing apparatus 100 determines whether or not the degree of effectiveness that was calculated during S804 is at or above a predetermined threshold (S805). In a case in which the degree of effectiveness is at or above the threshold (S805: YES), the processing proceeds to S806, and in a case in which the degree of effectiveness is less than the threshold (S805: NO), the processing is completed.

For example, in the image capturing environment of the image as shown in FIG. 5A, and FIG. 5B, the illuminance is sufficient, and there is no fog, haze, or the like, and therefore, a high value is calculated for the degree of effectiveness. Therefore, if the threshold value has been suitably decided, the degree of effectiveness will be greater than or equal to the threshold value, and the processing will proceed to S806. Conversely, for example, in the image capturing environment of the image that is shown in FIG. 6A, and FIG. 6B, the sense of resolution has become poor due to fog, and therefore, the degree of effectiveness becomes less than the threshold value, and the processing is completed without storing the visible light image 501 as the teacher data.

When it has been determined that the degree of effectiveness is greater than or equal to the threshold value, the teacher data selecting unit 104 of the image processing apparatus 100 stores the visible light image 501 as the teacher data, and stores the thermal image 601 as the student data (S806).

Next, the machine learning unit of the image processing apparatus 100 executes machine learning by using the teacher data and student data that have been stored (S807). A detailed description of the method for the machine learning will be described below using FIG. 9.

As has been described above, it is made possible to acquire a suitable visible light image as teacher data according to the method that has been explained in the present embodiment.

Note that the image data that is input into the machine learning may also be input after having performed processing that facilitates the learning on the image. Below, four examples of processing for the images will be explained.

(1) Processing that enhances the contours of the subject.
Contrast enhancement is performed so as to enhance the contours of the subject. In addition, data that has been binarized may also be output.
(2) Processing for the image size.
The region in which the subject is image captured is cut out. At this time, the same region (a position in which the regions overlap) is cut out for learning from the visible light image and the thermal image. In addition, in a case in which the image capturing range is different for the visible light image and the thermal light image, by cutting out regions, it is made such that the size and the positions of the images are made to match. In addition, in a case in which the pixel numbers for the visible light image 501 and the thermal image 601 are different, machine learning may also be performed after having made the pixel numbers match. For example, in a case in which the visible light image 501 has a resolution of $3840 \times 2160$, and the thermal image 601 has a resolution of $1280 \times 720$, the thermal image 601 is input into the machine learning unit 105 after having upscaled it to a resolution of $3840 \times 2160$.
(3) Processing to delete unnecessary regions
The data for the background region is painted over in white, and black. In addition, color information cannot be reproduced in the thermal image 601, and therefore the color information for the visible light image 501 is deleted. Characters such as a vessel name that has been written on a ship, and the like cannot be reproduced in the thermal image 601, and therefore, it is desirable that processing is performed to rase the precision of the learning such as using a low pass filter to blur regions in which characters have been image captured in the visible light image 501, and the like.

(4) Processing to correct parallax

In a case in which the distance from the subject is small, parallax (trapezoid) correction is performed. For example, a threshold value such as within 500m is set for the distance from the image processing apparatus 100 to the subject, and when the distance is smaller than this, it is made such that parallax correction is performed. In addition, it is preferable that the image parameter for the parallax correction is changed for each distance.

Note that when the visible light image is stored as teacher data during the learning for the machine learning (S806), the labeling may also be performed on the environmental data (marking the classifications of the data). It is possible to increase the precision of image generation by performing machine learning from data with the same label. For example, there are labels such as nighttime, fog/haze, long distance (a numerical value such as xx[km], and the like), and the like.

In addition, labelling may also be performed for the classification of the subject. For example, there is ship, person, vehicle, aircraft, drone, and the like. Furthermore, in a case in which the usage scenario is limited, this may also be more specific classifications. For example, in the case of a ship, there are labels such as large, small, sailing vessel, and the like.

In addition, the weighting for the machine learning may also be changed according to the degree of effectiveness. It is preferable if teacher data for which the degree of effectiveness is close to the threshold value is set so as to have smaller weight despite still being used as teacher data. It is thereby made possible to perform more suitable learning for the machine learning.

Next, a detailed explanation of the machine learning will be explained using FIG. 9.

This is processing that corresponds to S807 in FIG. 9.

First, the visible light image 501 that is teacher data is input into the machine learning unit 105 of the image processing apparatus 100 (S901).

Next, the thermal image 601 that is the student data is input into the machine learning unit 105 of the image processing apparatus 100 (S902). The images that have been input by the teacher data input processing and the student data input processing are images that correspond temporally, that is, images that were image captured at the same time.

Next, the machine learning unit 105 of the image processing apparatus 100 performs image processing using a neural network (S903). During the image processing for S903, the image quality is enhanced for the thermal image 601, which is the student image, based on the image parameter that was calculated during S904 (explained below).

Next, the machine learning unit 105 of the image processing apparatus 100 compares the teacher data that was input during S901 with the student data after the image processing from S903, and a difference is calculated (S905).

Next, the machine learning unit 105 of the image processing apparatus 100 calculates an update amount for the image parameter based on the difference that was calculated during S905 (S906).

Next, the machine learning unit 105 of the image processing apparatus 100 calculates the image parameter based on the update amount for the image parameter from S906 (S904). In this context, the image parameter is a parameter that represents a gamma value, brightness, contrast, sharpness, and the like.

As has been explained so far, it is possible to acquire an image in which the sense of resolution has been increased (the contours have been made clear) by performing machine learning for image processing by using teacher data with a high degree of effectiveness.

In addition, although an example has been explained for machine learning for image processing, machine learning for classification may also be used. For example, in a case in which the degree of effectiveness is high, when it is determined that the subject is a ship from the image analysis for the visible light image, the ship is made correct (teacher data). At this time, in the machine learning for which the thermal image was made the student data, the ship is learned as correct. In this manner, it is also possible to apply different machine learning such as classification and the like. The classification is not limited to ships, and it is also possible to perform the determination by setting an arbitrary classification such as a reef, a person, a vehicle, an animal, an aircraft, and the like.

Next, the basic concept of a neural network as the model for the machine learning according to the First Embodiment will be explained.

A neural network is a computer model that imitates the movement of nerve cells (neurons) in the human brain, and is a model that has nodes (neurons) that have been disposed in a plurality of layers, and in which these nodes transmit and process information by being connected to each other. A neural network is configured by an input layer, an intermediate layer, and an output later. Note that although in the example in FIG. 10, there are two layers that are made intermediate layers, the intermediate layer may also be configured by more than two layers.

In the neural network, when each node (neuron) transmits a signal to the next node, the importance of the input signal is adjusted using values that are called weights. In addition, each node adds a value called a bias, and the signal is output to the connected node after finally passing through an activation function. In the process of learning, the weights and biases are adjusted, and the model is improved such that more precise predictions can be performed.

In the present embodiment, the weighting of the image parameter is adjusted from the comparison of the results of the output layer with the teacher data that is input.

Next, the process for the inference for the machine learning according to the First Embodiment will be explained using FIG. 11.

First, the machine learning unit 105 of the image processing apparatus 100 inputs the image data for the thermal image 601 that was image captured by the non-visible light image capturing unit 112 (S911).

Next, the machine learning unit 105 of the image processing apparatus 100 performs image processing using the neural network, and performs correction processing on the thermal image 601 based on the image parameter that has been obtained during S913 (S912). The image parameter that is calculated during S913 of FIG. 11 is an image parameter that has been calculated by calculation processing for the image parameter for S904 from the time of the learning that was shown in FIG. 9. The image that has been generated by the image processing (the thermal image 611 after image correction) is output to serve as a corrected thermal image (S914), is stored on the nonvolatile memory 303, and is transmitted to the client apparatus 200.

Next, the details of the calculation processing for the degree of effectiveness will be explained.

A degree of effectiveness V for selecting a visible light image to serve as the teacher data can be calculated, for example, as a weighted linear sum for an environmental factor using the following (Formula 1).

[Formula 1]

$$V = \frac{F(1)}{F_{max}(1)} + W_2 \frac{F(2)}{F_{max}(2)} + \cdots + W_n \frac{F(n)}{F_{max}(n)}$$

In this context, $W_i$ $(1 \leqq i \leqq n)$ is the weight coefficient, $F(i)$ $(1 \leqq i \leqq n)$ is a value for an environmental factor i, and $F_{max}(i)$ is the largest value that the environmental factor i can become.

The weight coefficient $W_i$ makes the values for items that have been determined to be important larger. In addition, it is made such that the value for each item is made 0 - 1 by dividing the value for $F(i)$ by $F_{max}(i)$. By performing such standardization, it is possible to handle factors having different scales and units in a unified manner, and degree of effectiveness evaluations with a higher degree of precision become possible. That is, situations in which a specific factor becomes a value that is extremely large in relation to the other values are prevented, and it is possible to prevent systematic errors from appearing in the overall degree of effectiveness calculation. In addition, it is also possible to easily and intuitively set the weight coefficient.

If the specific environmental factors are made, for example, the illuminance, the weather, the time, and the movement speed, then the degree of effectiveness V becomes as is shown in the following (Formula 2).

[Formula 2]

$$V = w_1 \frac{F(illuminance)}{F_{max}(illuminance)} + w_2 \frac{F(weather)}{F_{max}(weather)} + w_3 \frac{F(time)}{F_{max}(time)} + w_4 \frac{F(speed)}{F_{max}(speed)}$$

The illuminance is the amount of light that is received by the image processing apparatus 100, and is acquired by the illuminance acquisition unit 121, and the larger that the illuminance is, the more effective it is determined that the image capturing environment for the visible light image is. In addition, the greatest value for the illuminance is set at a statistically possible and suitable value according to the image capturing environment.

The weather is the amount of light that is received by the image processing apparatus 100, and is acquired by the weather information acquisition unit 122, and when there is rain or clouds, it is determined that the image capturing environment of the visible light image is not effective, and conversely, when it is sunny, it is determined that the image capturing environment of the visible light image is effective. Therefore, for example, the weather is defined using the following (Formula 3), and (Formula 4).

[Formula 3]

$$F(weather) = \begin{cases} 0 \ldots heavy\ rain \\ 0.25 \ldots rain \\ 0.5 \ldots cloudy \\ 0.75 \ldots sunny \\ 1 \ldots clear\ weather \end{cases}$$

[Formula 4]

$$F_{max}(weather) = 1$$

The time is information that is obtained by taking into account a calendar that is accessed by the image processing apparatus 100 being connected to the internet and an internal clock, as well as position information (referencing the times of the sunrise and the sunset). In relation to the time, the degree of effectiveness is set so as to be a larger value for times at which the sunlight is stronger, and for example, is defined in the same manner as the following (Formula 5), and (Formula 6).

[Formula 5]

$$F(time) = \begin{cases} 0.4 \ldots early\ morning \\ 1 \ldots daytime \\ 0.6 \ldots dusk \\ 0 \ldots nighttime \end{cases}$$

[Formula 6]

$$F_{max}(time) = 1$$

In this context, if it is made such that the time of the sunrise and sunset are known for the image capturing location, for example, the definitions of the times are made to be the following.
Daytime: approximately one hour after sunrise until approximately one hour before sunset.
Dusk: one hour before sunset until sunset.
Nighttime: from sunset until one hour before sunrise.
Early morning: from one hour before sunrise until one hour after sunrise.
Note that the values and time in the (Formula 5) may be suitably decided according to latitude and longitude for the image capturing location.
In addition, with respect to the factor for the movement speed, the value is set such that the degree of effectiveness is made high when the image processing apparatus 100 is not moving, and the degree of effectiveness is made small when the movement speed of the image processing apparatus 100 is high. Therefore, for example, this is defined in the same manner as the following (Formula 7), and (Formula 8).

[Formula 7]

$$F(speed) = \frac{1}{1 + v}$$

[Formula 8]

$$F_{max}(speed)\begin{smallmatrix}=F(0)\\=1\end{smallmatrix}$$

In this context, v is the movement speed of the image processing apparatus 100 that is acquired by the speed acquisition unit 126.

As has been described above, in the image processing apparatus of the present embodiment, the environmental conditions at the time of the image capturing are referenced, and the degree of effectiveness during the image capturing of the visible light image is calculated using these environmental conditions. In addition, visible light images with high degrees of effectiveness are selected to serve as the teacher data, machine learning is performed using this teacher data, and learning for correcting the thermal image is performed. Therefore, it is possible to perform suitable corrections to the image such as noise reduction, an increase in the resolution, and the like.

[Second Embodiment]

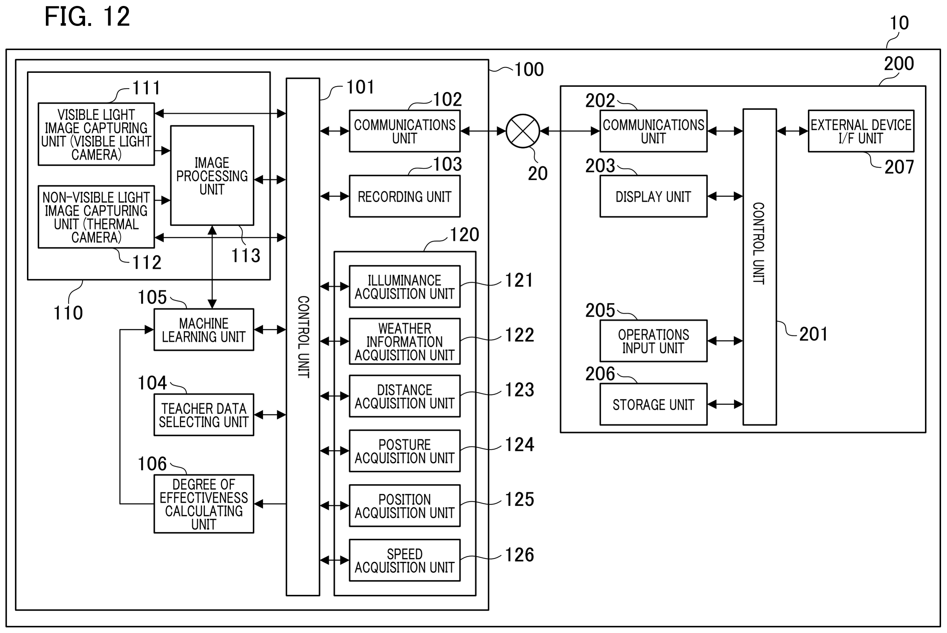

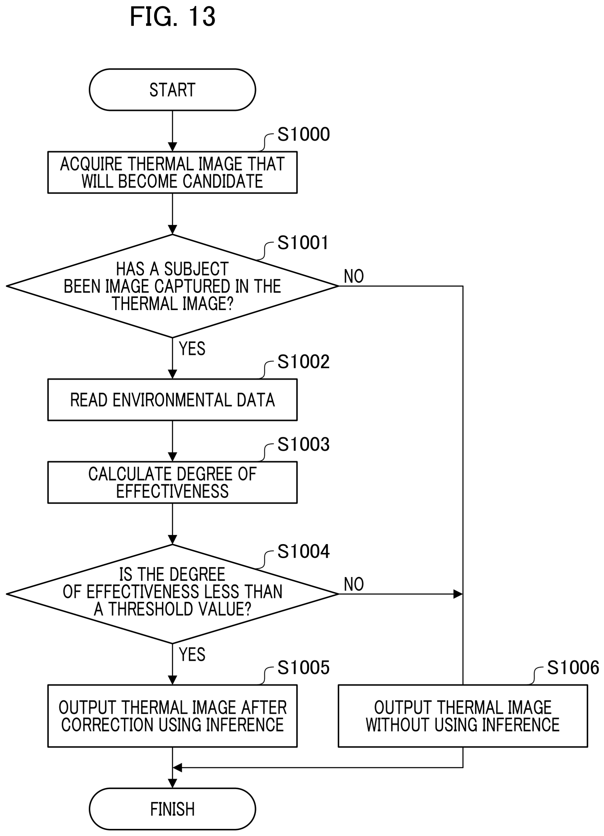

Below, the Second Embodiment according to the present disclosure will be explained using FIG. 12 and FIG. 13. FIG. 12 is an overall configurational diagram for the image capturing system according to the Second Embodiment. FIG. 13 is a flowchart showing output processing for the thermal image according to the Second Embodiment. During the inference that was shown in FIG. 11 of the First Embodiment, it is possible to generate a high resolution thermal image by image processing the thermal image based on an image parameter that has been obtained during the learning for FIG. 9.

In the present embodiment, the correction of the thermal image is selectively performed by machine learning as was explained in the First Embodiment. In the present embodiment, whether or not to perform the correction of the thermal image 601 is determined based on the degree of effectiveness. That is, when the degree of effectiveness is low, this is a severe environment for image capturing, and the subject will not be able to be properly image captured in the visible light image 501, and therefore, it is preferable that a high resolution thermal image be generated. In contrast, when the degree of effectiveness is high, it can be thought that this is a case of a not severe environment, and it will be possible to capture a high resolution image in the visible light image 501, and therefore, it is made such that the thermal image 611 is not corrected by inference. It is thereby possible to decrease the data processing load.

Below, the explanation will center on the portions of the present embodiment that differ from the First Embodiment.

As is shown in FIG. 11, as the system configuration, in comparison to the configuration of FIG. 2 in the First Embodiment, it is different that the degree of effectiveness that is calculated in the degree of effectiveness calculating unit 106 is referenced by the machine learning unit 105 (the degree of effectiveness calculating unit 106 → machine learning unit 105).

During the output processing for the thermal image, as will be described below, the processing for determining whether or not to correct the thermal image is branched according to the inference processing for the machine learning based on the degree of effectiveness.

First, the machine learning unit 105 of the image processing apparatus 100 acquires the thermal image that will become the candidate for correction (S1000).

Next, the machine learning unit 105 of the image processing apparatus 100 determines whether or not the subject 701 has been image captured in the thermal image 601 from the image (S1001). As the determination method, for example, it is determined whether or not there is a heat source. In a case in which the subject 701 has been image captured (S1001: YES), the processing proceeds to S1002. In a case in which it has been determined that the subject 701 has not been image captured in the thermal image 601 (S1001: NO), the processing proceeds to S1006.

Next, when it has been determined that the subject 701 has been image captured in the thermal image 601, the degree of effectiveness calculating unit 106 of the image processing apparatus 100 reads the environmental data 50 that was acquired in the environmental information acquisition unit 120 (S1002).

Next, the degree of effectiveness calculating unit 106 of the image processing apparatus 100 calculates a degree of effectiveness based on the environmental data 50 that has been read during S1003 (S1003). The calculation method for the degree of effectiveness is the same as the method that was explained in the First Embodiment.

Next, the machine learning unit 105 of the image processing apparatus 100 determines whether or not the degree of effectiveness that was calculated during S1003 is less than a predetermined threshold value (S1004). In a case in which the degree of effectiveness is less than the threshold value (S1004: YES), the processing proceeds to S1005, and in a case in which the degree of effectiveness is greater than or equal to the threshold value (S1004: NO), the processing proceeds to S1006.

In a case in which during S1004, the degree of effectiveness is less than the threshold value, as was shown in FIG. 11 of the First Embodiment, the correction of the thermal image is performed by the inference processing of the machine learning, and the thermal image is output (S1005). This is because when the degree of effectiveness is less than the threshold value, the image capturing environment is severe, and it is thought that performing correction will be meaningful.

When the subject 701 has not been image captured in the thermal image 601 during S1001, and in a case in which the degree of efficiency is greater than or equal to the threshold value during S1004, the inference processing for the machine learning is not performed, and the thermal image is output (S1006). This is because when the subject 701 has not been image captured in the thermal image 601, it is thought that there is no meaning in adding corrections, and when the degree of effectiveness is greater than or equal to the threshold value, the image capturing environment is favorable, and it is thought that the resolution of the thermal image will be good.

As has been explained above, according to the processing of the present embodiment, whether or not to execute machine learning using inference is determined according to the degree of effectiveness that is calculated from the environmental conditions, and in a case in which it is determined that this is not necessary, machine learning using inference is not executed, and the image is not corrected. It is therefore not necessary to generate surplus data in the system, and therefore, it is possible to reduce the data amount, and it is not necessary to perform unnecessary processing, and therefore, it is possible to decrease the processing load of the system.

[Third Embodiment]

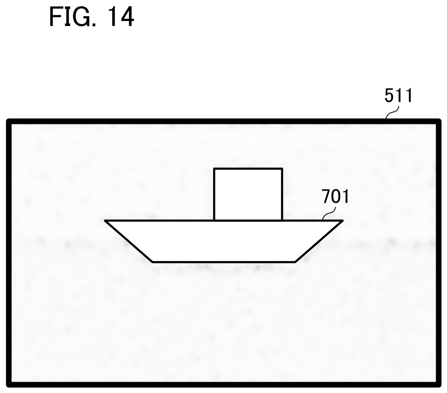

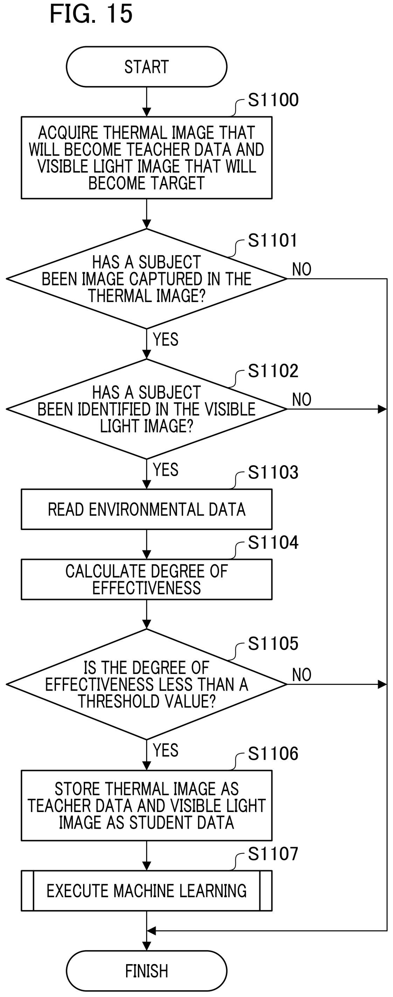

Below, the Third Embodiment will be explained using FIG. 14, and FIG. 15.

Fig. 14 is a diagram showing one example of a visible light image in which the contours have been corrected by machine learning.

FIG. 15 is a flowchart showing processing in which a thermal image is stored as the teacher data, and machine learning is performed.

In the First Embodiment, the resolution of the thermal image is enhanced by machine learning, and therefore, an example has been shown in which the visible light image is made the teacher data for the thermal image. Conversely, in the present embodiment, an example will be explained in which in order to increase the sense of resolution of the visible light image, the thermal image is made the teacher data for the visible light image.

The visible light image 501 that is shown in FIG. 6A of the First Embodiment is an image that was captured in a severe environment, and therefore, it is an image in which a sense of resolution has not been sufficiently obtained. In the present embodiment, the thermal image 601 is made the teacher data for the visible light image 501 and the sense of resolution of the visible light image 501 is increased by using machine learning.

FIG. 14 shows a visible light image 511 after the visible light image 501 has been corrected using the thermal image 601 as the teacher data in this manner. In the visible light image 511 after correction in FIG. 14, it becomes possible to acquire an image in which the sense of resolution has been increased by performing inference for machine learning in relation to the visible light image 501 of FIG. 6A.

Next, using FIG. 15, processing will be explained in which the thermal image is stored as the teacher data and machine learning is performed.

First, the teacher data selecting unit 104 of the image processing apparatus 100 acquires the thermal image that is made the candidate for the teacher data and the visible light image that was image captured at the same time as the thermal image (S1100).

Next, the teacher data selecting unit 104 of the image processing apparatus 100 determines whether or not the subject 701 has been image captured in the thermal image 601 from the image (S1101). As the determination method, for example, it is determined whether or not there is a heat source. In a case in which the subject S701 has been image captured (S1101: YES), the processing proceeds to S1102. In addition, in a case in which it has been determined that the subject 701 was not image captured in the thermal image 601 (S1101: NO), this thermal image is not suitable to serve as the teacher data, and therefore, the processing is completed.

In a case in which the subject 701 has been image captured in the thermal image 601, it is determined whether or not the subject 701 is identified in the visible light image 501 from the image (S1102). As the determination method, for example, it is determined whether or not the subject 701 has specific feature points. That is, image analysis is performed on the visible light image 501, edge detection is performed, and it is determined whether or not the feature points are present from the shape thereof. In a case in which the specific subject has been image captured (S1102: YES), the processing proceeds to S1103. In a case in which the specific subject has not been image captured (S1102: NO), the processing is completed.

Next, when it has been determined that the subject 701 was image captured in the visible light image 501, the degree of effectiveness calculating unit 106 of the image processing apparatus 100 reads the environmental data 50 that was acquired by the environmental information acquisition unit 120 (S1103).

Next, the degree of effectiveness calculating unit 106 of the image processing apparatus 100 calculates the degree of effectiveness based on the environmental data 50 that was read during S1103 (S1104). The specific calculation method for the degree of effectiveness is the same as the calculation method in the First Embodiment.

Next, the teacher data selecting unit 104 of the image processing apparatus 100 determines whether or not the degree of effectiveness that was calculated during S1104 is at or above a predetermined threshold value (S1105). In a case in which the degree of effectiveness is at or above the threshold value (S1105: YES), the processing proceeds to S806, and in a case in which the degree of effectiveness is less than the threshold value (S1105: NO), the processing is completed.

When it has been determined that the degree of effectiveness is greater than or equal to the threshold value, the teacher data selecting unit 104 of the image processing apparatus 100 stores the thermal image 601 as the teacher data, and stores the visible light image 501 as the student data (S1106).

Next, the machine learning unit of the image processing apparatus 100 executes machine learning by using the teacher data and student data that have been stored (S1107). The details of the method for the machine learning are the same as those in First Embodiment other than the reversal of the teacher data and the student data.

Note that although an example was explained in the First Embodiment in which the image data that is input into the machine learning is input after having processed the image so as to be easy to learn, the same also applies to the time of learning in the Third Embodiment.

As has been described above, it is made possible to acquire a thermal image as the teacher data according to the method that has been explained in the present embodiment.

Note that generally, the threshold value for the determination for S805 of FIG. 8 in the First Embodiment may also be different from the threshold value for S1105 in FIG. 15 of the present embodiment.

In addition, it may also be made such that as the machine learning, the processing that is shown in FIG. 8 in which the visible light image 501 is made the teacher data and the thermal image 601 is made the student data is performed at the same time as the processing that is shown in FIG. 12 in which the thermal image 601 is made the teacher data and the visible light image 501 is made the student data. In addition, at this time, it may also be made such that it is determined which image from among the visible light image and the thermal image will be decided as the teacher data according to the degree of effectiveness, and such that a suitable image is selected as the teacher data.

Next, an example of environmental factors that should be taken into account in particular during the calculation of the degree of effectiveness when the thermal image will be used as the teacher data will be explained.

The non-visible light camera that captures images of the thermal image detects subjects based on temperature, and therefore, the environmental factors such as those shown below become important.

(1) The temperature difference between the subject and the background.

In a thermal image, the larger the difference in temperature there is between the subject and the background, the more clearly that the subject can be identified. Therefore, this temperature difference becomes a primary factor in deciding the degree of effectiveness for the thermal image. That is, the temperature of the subject and the temperature of the background are compared, the difference therebetween is calculated, and in a case in which the temperature difference is large, the degree of effectiveness is made high, and in a case in which the temperature difference is low, the degree of effectiveness is made low.

(2) Humidity

In an environment with high humidity, there are cases in which the precision of the thermal image decreases. This is because water vapor in the air hinders the transmission of infrared rays, and the image becomes unclear, and therefore, humidity is an important factor. Thus, the relative humidity is measured using a percentage (%), and the higher that the humidity is the lower that the degree of effectiveness is made, and the lower that the humidity is, the higher that the degree of effectiveness is made.

(3) Wind

If the wind is strong, there are cases in which temperatures of the subject and the background change rapidly, and this affects the image capturing precision of the non-visible light camera that image captures the thermal image. That is, when the wind is strong, it is easy for the temperature of the subject to change, and the precision of the image is lowered. Thus, the stronger that the wind is, the lower that the degree of effectiveness is made for the thermal image, and the weaker that the wind is, that is, in cases in which there is a gentle wind, the higher that the degree of effectiveness is made.

(4)Time

Although the non-visible light camera that captures the thermal images is able to be used both day and night, the heat from the sun during the day affects the overall environment, and therefore, there are cases in which the temperature difference becomes comparatively smaller at night. There are thereby cases in which the degree of effectiveness of the thermal image decreases slightly during the daytime. In this context, based on the time of the image capturing, the degree of effectiveness is set to be lower during the daytime, and a high degree of effectiveness is set at night.

As has been explained above, in the present embodiment, a thermal image having a high degree of effectiveness is selected as the teacher data, machine learning is performed using this teacher data, and learning for correcting the visible light image is performed. Therefore, it is possible to perform suitable correction for the image such as noise reduction, increases in the resolution, and the like.

[Fourth Embodiment]

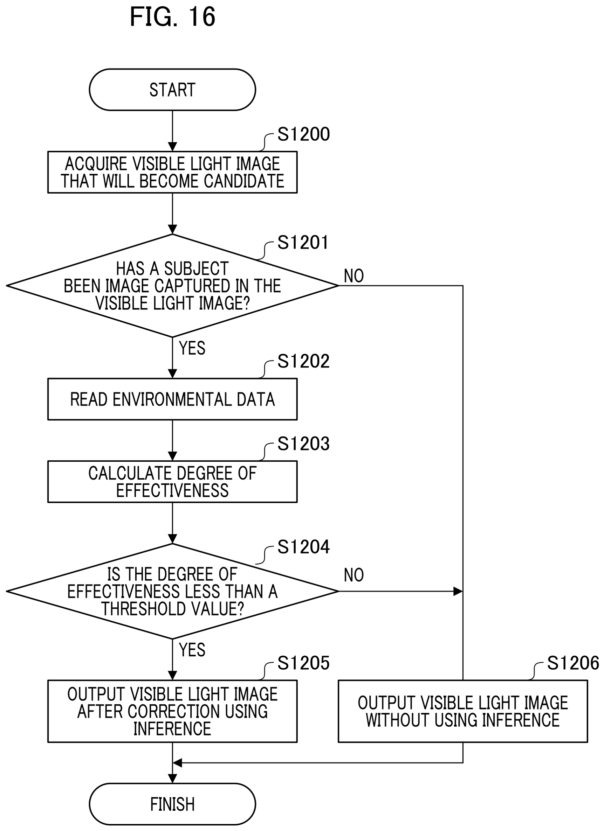

Below, the Fourth Embodiment according to the present disclosure will be explained using FIG. 16.
FIG. 16 is a flowchart showing output processing for the visible light image according to the Fourth Embodiment.

In the Second Embodiment, during the inference for the machine learning of the First Embodiment, whether or not to perform correction for the thermal image 601 was determined based on the degree of effectiveness. Based on the same idea, in the present embodiment, in the inference for the machine learning of the Third Embodiment, whether or not to perform correction for the visible light image 501 is determined based on the degree of effectiveness.

Below, the explanation of the present embodiment will focus on the portions that are different than the Second Embodiment.
The system configuration is the same as the system configuration in FIG. 11 of the Second Embodiment.

During the output processing for the visible image, as will be described below, the processing for whether or not to correct the visible light image according to inference processing for the machine learning is branched based on the degree of effectiveness,

First, the machine learning unit 105 of the image processing apparatus 100 acquires the visible light image 501 that becomes a candidate for correction (S1200).

Next, the machine learning unit 105 of the image processing apparatus 100 determines whether or not the subject 701 has been image captured in the visible light image from the image (S1201). As the determination method, for example, it is determined whether or not the subject is present using edge detection. In a case in which the subject S701 has been image captured (S1201: YES), the processing proceeds to S1202. In addition, in a case in which it has been determined that the subject 701 was not image captured in the visible light image 501 (S1201: NO), this thermal image is not suitable to serve as the teacher data, and therefore, the processing is completed.

Next, when it has been determined that the subject 701 has been image captured in the visible light image 501, the degree of effectiveness calculating unit 106 of the image processing apparatus 100 reads the environmental data 50 that was acquired by the environmental information acquisition unit 120 (S1202).

Next, the degree of effectiveness calculating unit 106 of the image processing apparatus 100 calculates the degree of effectiveness based on the environmental data 50 that was read during S1202 (S1203). Note that the calculation method for the degree of effectiveness is the same as the method that was explained in the First Embodiment.

Next, the machine learning unit 105 of the image processing apparatus 100 determines whether or not the degree of effectiveness that was calculated during S1203 is less than a predetermined threshold value (S1204). In a case in which the degree of effectiveness is less than the threshold value (S1204: YES), the processing proceeds to S1205, and in a case in which the degree of effectiveness is greater to or equal than the threshold value (S1204: NO), the processing proceeds to S1206.

In a case in which during S1204, the degree of effectiveness is less than the threshold value, as was shown in FIG. 11 of the First Embodiment, the correction of the visible light image 501 is performed by the inference processing of the machine learning, and the thermal image is output (S1205). This is because when the degree of effectiveness is less than the threshold value, the image capturing environment is severe, and it is thought that performing correction will be meaningful.

When the subject 701 has not been image captured in the visible light image during 501 during S1201, and in a case in which the degree of effectiveness is greater than or equal to the threshold value during S1204, the inference processing for the machine learning is not performed, and the visible light image 501 is output (S1206). This is because when the subject 701 has not been image captured in the visible light image 501, it is thought that there is no meaning in adding corrections, and when the degree of effectiveness is greater than or equal to the threshold value, the image capturing environment is favorable, and it is thought that the thermal image will have a high resolution.

As has been explained above, according to the processing of the present embodiment, in the same manner as in the Second Embodiment, whether or not to execute machine learning using inference is determined according to the degree of effectiveness that is calculated from the environmental conditions. In addition, in a case in which it is determined that inference is not necessary, machine learning using inference is not executed, and the image is not corrected. It is therefore not necessary to generate surplus data in the system, and therefore, it is possible to reduce the data amount, and it is not necessary to perform unnecessary processing, and therefore, it is possible to decrease the processing load of the system.

[Fifth Embodiment]

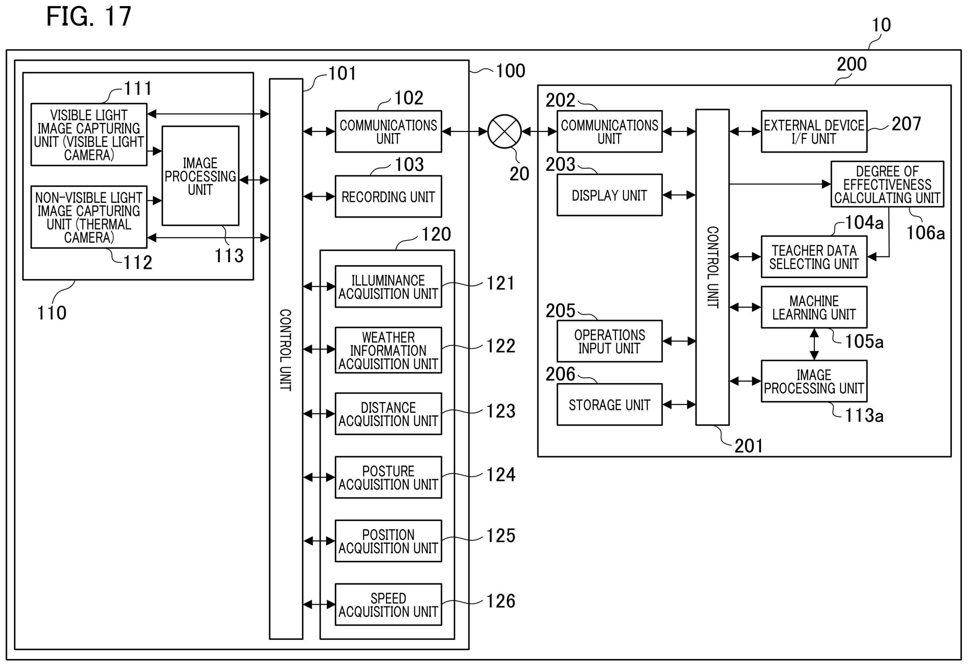

Below, the Fifth Embodiment according to the present disclosure will be explained using FIG. 17.
FIG. 17 is an overall configurational diagram of an image capturing system according to the Fifth Embodiment.

In the First Embodiment, an example was shown in which the image processing apparatus 100 was provided with a machine learning unit 105, learning and inference where performed in the image processing unit 100, and the resolution of the thermal image was increased. In the present embodiment, the client apparatus 200 is provided with the machine learning unit 105, and the same processing is performed in the client apparatus 200.

As is shown in FIG. 17, the client apparatus 200 of the present embodiment is provided with the functional configuration units of an image processing unit 113a, a teacher data selecting unit 104a, a machine learning unit 105a, and a degree of effectiveness calculating unit 106a. These units have the same functions as each of the functional units of the First Embodiment that have been assigned the same names.

In addition, the control unit 101 of the image processing apparatus 100 operates so as to transmit the environmental data that was acquired in the environmental information acquisition unit 120 to the client apparatus 200 at each suitable time, and when there has been a request from the client apparatus 200.

The client apparatus 200 is realized by a high performance PC, and the like, and it is easier to make the CPU 301 higher performance than the image processing apparatus 100, and therefore, it is possible to expect increased processing speed during the processing for the machine learning and the like.

In addition, the client apparatus 200 is able to connect to a server, and may also handle cloud data. In addition, a portion of the functions may also be had by a server, and a separate personal computer that is connected to the server.

Note that in a case in which an image is transmitted to an apparatus on a different network, generally, this is often transmitted as a compressed image. However, it is preferable if in the machine learning unit 105, the images have not been compressed, and are pre-compression images with large amounts of information. Therefore, in a case in which, as in the current embodiment, the machine learning unit 105 is located in the client apparatus 200, it is preferable if image data before compression is transmitted to the client apparatus 200 from the image processing apparatus 100 to the extent that is permitted by the network band.

As has been explained above, in the present embodiment, it is made possible to perform machine learning in a high performance client apparatus, and to perform more efficient image correction processing as a system.

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)TM), a flash memory device, a memory card, and the like.

While the present disclosure has been described with reference to embodiments, it is to be understood that the present disclosure is not limited to the disclosed embodiments. The scope of the following claims is to be accorded the broadest interpretation so as to encompass all such modifications and equivalent structures and functions.

This application claims the benefit of priority from Japanese Patent Application No. 2024-193447, filed on November 5, 2024, which is hereby incorporated by reference herein in its entirety.

## Claims

1. An image processing apparatus (100) configured to execute processing relating to a non-visible light image by machine learning using a visible light image as teacher data, the image processing apparatus comprising:

   a machine learning unit (105) configured to execute learning and inference in order to execute the processing using the teacher data;
   an environmental information acquisition unit (120) configured to acquire surrounding environmental information;
   a degree of effectiveness deciding unit (106) configured to decide a degree of effectiveness for the visible light image as teacher data based on the environmental information that has been acquired by the environmental information acquisition unit; and
   a teacher data selecting unit (104) configured to determine whether or not the visible light image will be effective as teacher data for a non-visible light image that temporally corresponds to the visible light image based on the degree of effectiveness that has been decided by the degree of effectiveness deciding unit, and select teacher data that has been determined to be effective.

2. The image processing apparatus according to claim 1, wherein

an environmental factor of the environmental information for deciding the degree of effectiveness includes at least one from among brightness at the time of image capturing, weather information from the time of image capturing, a distance between the image processing apparatus and a subject in an image, a posture of the image processing apparatus, and a movement speed of the image processing apparatus; and/or
the degree of effectiveness is decided as a weighted linear sum of the environmental factor.

3. The image processing apparatus according to claim 1 or 2, wherein the teacher data selecting unit:

determines, based on the degree of effectiveness, whether or not to perform correcting of the non-visible light image by inference as the processing; and/or
changes, based on the degree of effectiveness, a weight of the image that is treated as the teacher data at the time of the learning.

4. The image processing apparatus according to any one of claims 1 to 3, wherein the machine learning unit learns an image parameter in which image quality of an image has been increased by the machine learning unit.

5. The image processing apparatus according to claim 4, wherein the machine learning unit generates an image in which the image quality has been improved.

6. The image processing apparatus according to any one of claims 1 to 4, wherein the machine learning unit corrects and outputs a non-visible light image.

7. An image processing apparatus configured to execute processing relating to a visible light image, and a non-visible light image by machine learning using a visible light image, and a non-visible light image as teacher data, the image processing apparatus comprising:

a machine learning unit configured to execute learning and inference in order to execute the processing using the teacher data;
an environmental information acquisition unit configured to acquire surrounding environmental information;
a degree of effectiveness deciding unit configured to decide a degree of effectiveness as teacher data for the visible light image and the non-visible light image based on the environmental information that has been acquired by the environmental information acquisition unit; and
a teacher data selecting unit configured to perform a determination based on the degree of effectiveness that has been decided by the degree of effectiveness deciding unit as to whether or not the visible light image will be effective as teacher data for a non-visible light image that temporally corresponds to the visible light image, and a determination based on the degree of effectiveness that has been decided by the degree of effectiveness deciding unit as to whether or not the non-visible light image will be effective as teacher data for a visible light image that temporally corresponds to the non-visible light image, and select teacher data that has been determined to be effective.

8. The image processing apparatus according to claim 7, wherein the teacher data selecting unit determines which image from among a visible light image and a non-visible light image to make the teacher data according to the degree of efficiency.

9. The image processing apparatus according to claim 7 or 8, wherein the machine learning unit determines, based on the degree of efficiency, whether or not to perform correction of the visible light image using inference.

10. The image processing apparatus according to any one of claims 7 to 9, wherein the machine learning unit:

processes the visible light image that was selected to serve as the teacher data, and the non-visible light image that was selected to serve as the teacher data; and/or
in a case in which a distance between the image processing apparatus and a subject in an image is close, performs parallax correction when processing the visible light image that was selected to serve as the teacher data, and the non-visible light image that was selected to serve as the teacher data.

11. The image processing apparatus according to any one of claims 7 to 10, wherein the teacher data selecting unit:

    labels the environmental information in the teacher data; and/or
    labels a classification of a subject in an image in the teacher data.

12. The image processing apparatus according to any one of claims 7 to 11, wherein the machine learning unit:

    outputs a classification of a subject in a visible light image, and a classification of a subject in a non-visible light image; and/or
    corrects and outputs a visible light image, and a non-visible light image.

13. An image processing method by an image processing apparatus configured to execute processing relating to a non-visible light image by machine learning using a visible light image as teacher data, the image processing method comprising:

    machine learning during which the image processing apparatus executes learning and inference in order to execute the processing using the teacher data;
    environmental information acquiring during which the image processing apparatus acquires surrounding environmental information;
    degree of effectiveness deciding during which the image processing apparatus decides a degree of effectiveness as teacher data for the visible light image based on the environmental information that has been acquired during the environmental information acquiring; and
    teacher data selecting during which the image processing machine determines whether or not the visible light image will be effective as teacher data for a non-visible light image that temporally corresponds to the visible light image based on the degree of effectiveness that has been decided by the degree of effectiveness deciding, and selects teacher data that has been determined to be effective.

14. An image processing method by an image processing apparatus configured to execute processing relating to a visible light image, and a non-visible light image by machine learning using a visible light image, and a non-visible light image as teacher data, the image processing method comprising:

    machine learning during which the image processing apparatus executes learning and inference in order to execute the processing using the teacher data;
    environmental information acquiring during which the image processing apparatus acquires surrounding environmental information;
    degree of effectiveness deciding during which the image processing apparatus decides a degree of effectiveness as teacher data for the visible light image and the non-visible light image based on the environmental information that has been acquired by the environmental information acquisition unit; and
    teacher data selecting during which the image processing apparatus performs a determination based on the degree of effectiveness that has been decided by the degree of effectiveness deciding as to whether or not the visible light image will be effective as teacher data for a non-visible light image that temporally corresponds to the visible light image, and a determination based on the degree of effectiveness that has been decided by the degree of effectiveness deciding as to whether or not the non-visible light image will be effective as teacher data for a visible light image that temporally corresponds to the non-visible light image, and selects teacher data that has been determined to be effective.

15. A non-transitory computer-readable storage medium storing a computer program comprising instructions which, when executed by a computer, cause the computer to perform all the steps of the method of Claim 13 or Claim 14.

FIG. 1

FIG. 2

10

200

207 EXTERNAL DEVICE I/F UNIT

201 CONTROL UNIT

202 COMMUNICATIONS UNIT
203 DISPLAY UNIT
205 OPERATIONS INPUT UNIT
206 STORAGE UNIT

100
20
102 COMMUNICATIONS UNIT
103 RECORDING UNIT
120
121 ILLUMINANCE ACQUISITION UNIT
122 WEATHER INFORMATION ACQUISITION UNIT
123 DISTANCE ACQUISITION UNIT
124 POSTURE ACQUISITION UNIT
125 POSITION ACQUISITION UNIT
126 SPEED ACQUISITION UNIT

101
113 IMAGE PROCESSING UNIT
111 VISIBLE LIGHT IMAGE CAPTURING UNIT (VISIBLE LIGHT CAMERA)
112 NON-VISIBLE LIGHT IMAGE CAPTURING UNIT (THERMAL CAMERA)
110
105 MACHINE LEARNING UNIT
104 TEACHER DATA SELECTING UNIT
106 DEGREE OF EFFECTIVENESS CALCULATING UNIT

# FIG. 3

EP 4 738 243 A1

# FIG. 4

FIG. 5A

FIG. 5B

FIG. 6A

FIG. 6B

601

701

EP 4 738 243 A1

FIG. 7

29

## FIG. 8

START

S800
ACQUIRE VISIBLE LIGHT IMAGE THAT WILL BECOME TEACHER DATA AND THERMAL IMAGE THAT WILL BECOME TARGET

S801
HAS A SUBJECT BEEN IDENTIFIED IN THE THERMAL IMAGE? — NO

YES

S802
HAS A SUBJECT BEEN IDENTIFIED IN THE VISIBLE LIGHT IMAGE? — NO

YES

S803
READ ENVIRONMENTAL DATA

S804
CALCULATE DEGREE OF EFFECTIVENESS

S805
IS THE DEGREE OF EFFECTIVENESS GREATER THAN OR EQUAL TO A THRESHOLD VALUE? — NO

YES

S806
STORE VISIBLE LIGHT IMAGE AS TEACHER DATA AND THERMAL IMAGE AS STUDENT DATA

S807
EXECUTE MACHINE LEARNING

FINISH

FIG. 9

S901
INPUT TEACHER DATA

S902
INPUT STUDENT DATA

S903
IMAGE PROCESSING BY NEURAL NETWORK

S905
CALCULATE CALCULATION ERROR

S906
CALCULATE UPDATE AMOUNT

S904
CALCULATE IMAGE PARAMETER

FIG. 10

INPUT
LAYER

INTERMEDIATE
LAYER

INTERMEDIATE
LAYER

OUTPUT
LAYER

# FIG. 11

```
    S911                    S912                      S914
┌──────────┐      ┌──────────────────┐      ┌──────────┐
│  INPUT   │      │ IMAGE PROCESSING │      │  OUTPUT  │
│ THERMAL  │ ───▶ │    BY NEURAL     │ ───▶ │ THERMAL  │
│  IMAGE   │      │     NETWORK      │      │  IMAGE   │
└──────────┘      └──────────────────┘      └──────────┘
                           ▲
                           │  S913
                  ┌──────────────────┐
                  │ IMAGE PARAMETER  │
                  │ CALCULATING UNIT │
                  └──────────────────┘
```

FIG. 12

EP 4 738 243 A1

# FIG. 13

START

ACQUIRE THERMAL IMAGE THAT WILL BECOME CANDIDATE — S1000

HAS A SUBJECT BEEN IMAGE CAPTURED IN THE THERMAL IMAGE? — S1001

NO →

YES ↓

READ ENVIRONMENTAL DATA — S1002

CALCULATE DEGREE OF EFFECTIVENESS — S1003

IS THE DEGREE OF EFFECTIVENESS LESS THAN A THRESHOLD VALUE? — S1004

NO →

YES ↓

OUTPUT THERMAL IMAGE AFTER CORRECTION USING INFERENCE — S1005

OUTPUT THERMAL IMAGE WITHOUT USING INFERENCE — S1006

FINISH

FIG. 14

## FIG. 15

START

ACQUIRE THERMAL IMAGE THAT WILL BECOME TEACHER DATA AND VISIBLE LIGHT IMAGE THAT WILL BECOME TARGET ⌐S1100

HAS A SUBJECT BEEN IMAGE CAPTURED IN THE THERMAL IMAGE? ⌐S1101 — NO

YES

HAS A SUBJECT BEEN IDENTIFIED IN THE VISIBLE LIGHT IMAGE? ⌐S1102 — NO

YES

READ ENVIRONMENTAL DATA ⌐S1103

CALCULATE DEGREE OF EFFECTIVENESS ⌐S1104

IS THE DEGREE OF EFFECTIVENESS LESS THAN A THRESHOLD VALUE? ⌐S1105 — NO

YES

STORE THERMAL IMAGE AS TEACHER DATA AND VISIBLE LIGHT IMAGE AS STUDENT DATA ⌐S1106

EXECUTE MACHINE LEARNING ⌐S1107

FINISH

# FIG. 16

START

S1200

ACQUIRE VISIBLE LIGHT IMAGE
THAT WILL BECOME CANDIDATE

S1201

HAS A SUBJECT
BEEN IMAGE CAPTURED IN THE
VISIBLE LIGHT IMAGE?

NO

YES

S1202

READ ENVIRONMENTAL DATA

S1203

CALCULATE DEGREE OF
EFFECTIVENESS

S1204

IS THE DEGREE OF
EFFECTIVENESS LESS THAN A
THRESHOLD VALUE?

NO

YES

S1205

OUTPUT VISIBLE LIGHT IMAGE
AFTER CORRECTION USING
INFERENCE

S1206

OUTPUT VISIBLE LIGHT IMAGE
WITHOUT USING INFERENCE

FINISH

FIG. 17

EP 4 738 243 A1

Europäisches
Patentamt
European
Patent Office
Office européen
des brevets

# EUROPEAN SEARCH REPORT

**Application Number**

EP 25 21 1931

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HE YOUWEI ET AL: "LKAT-GAN: A GAN for Thermal Infrared Image Colorization Based on Large Kernel and AttentionUNet-Transformer", IEEE TRANSACTIONS ON CONSUMER ELECTRONICS, IEEE SERVICE CENTER, NEW YORK, NY, US, vol. 69, no. 3, 14 June 2023 (2023-06-14), pages 478-489, XP011946783, ISSN: 0098-3063, DOI: 10.1109/TCE.2023.3280165 [retrieved on 2023-06-15] | 1-8, 10-15 | INV. G06T5/60 |
| A | * abstract; figure 1 * * section IV. A. Dataset and Implementation Details * ----- | 9 | |
| X | CN 115 641 514 A (UNIV NINGBO) 24 January 2023 (2023-01-24) | 1,7,8, 10-15 | |
| A | * abstract; claim 1 * * paragraphs [0012], [0057] * ----- | 9 | |
| X | YANG SHUAI ET AL: "An unsupervised fusion method for infrared and visible image fusion under low-light condition", 20231208, vol. 12943, 8 December 2023 (2023-12-08), pages 129430O-129430O, XP060194706, ISSN: 0277-786X, DOI: 10.1117/12.3014572 ISBN: 978-1-5106-7192-8 | 7,8, 10-12,14 | TECHNICAL FIELDS SEARCHED (IPC) G06T |
| A | * abstract; figure 1 * * section 4. EXPERIMENTS 4.1 Datasets and parameter settings * ----- | 9 | |

The present search report has been drawn up for all claims

| Place of search | Date of completion of the search | Examiner |
|---|---|---|
| Munich | 26 February 2026 | Rimassa, Simone |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons
............................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 1931

This annex lists the patent family members relating to the patent documents cited in the above-mentioned European search report.
The members are as contained in the European Patent Office EDP file on
The European Patent Office is in no way liable for these particulars which are merely given for the purpose of information.

26-02-2026

| Patent document cited in search report | Publication date | Patent family member(s) | Publication date |
|---|---|---|---|
| CN 115641514 A | 24-01-2023 | NONE | |

EPO FORM P0459

For more details about this annex : see Official Journal of the European Patent Office, No. 12/82

**REFERENCES CITED IN THE DESCRIPTION**

**Patent documents cited in the description**

- JP 2022038287 A
- JP 2024193447 A